# EUROPEAN PATENT SPECIFICATION

(11) **EP 1 690 997 B1**
(45) Date of publication and mention of the grant of the patent: **16.01.2008**
(21) Application number: 06010136.7
(22) Date of filing: 04.08.2000
(51) Int. Cl.: E04C 2/32, E04B 9/04, E04C 2/34, B32B 3/28, E04C 2/36, E04B 9/22, E04B 1/86, B32B 3/12

(54) **Ceiling system with replacement panels**
Deckensystem mit austauschbaren Platten
Système de plafond avec des panneaux de rechange

(30) Priority: 13.08.1999 US 148834 P
(43) Date of publication of application: 16.08.2006
(62) Divisional of application: 00952516.3
(73) Proprietor: HUNTER DOUGLAS INC., Upper Saddle River, NJ 07458 (US)
(72) Inventor: Kuperus, Ko, 2498 BP Den Haag (NL); Swiszcz, Paul G., Boulder, CO 80304 (US)
(74) Representative: Smith, Samuel Leonard

(56) References cited:
- AU-A- 8 056 682
- DE-C- 684 202
- US-A- 3 314 846

## Description

### CROSS REFERENCE TO RELATED APPLICATION

This application claims priority to U.S. provisional application No. 60/148834, filed August 13, 1999.

### BACKGROUND OF THE INVENTION

### Field of the Invention

The present invention relates to coverings for the ceilings of building structures and, more particularly, to a drop ceiling panel wherein individual panels are supported on a matrix of support members.

### Description of the Relevant Art

The ceilings of building structures have taken numerous forms. Ceilings may be left unfinished so that rafters or beams of the building structure itself are exposed or the rafters and beams may be covered as with drywall, wood strips, plaster or other similar finishes. Walls of building structures may be similarly finished.

Another popular ceiling system is commonly referred to as a drop ceiling where a plurality of support bars are suspended from the unfinished ceiling so as to form a matrix having a plurality of side-by-side openings defined between the support bars. The openings are filled with panels which are typically rigid acoustical panels, with the panels being supported along their peripheral edge by the support bars. While such drop ceilings have met with some success, there are numerous disadvantages. One disadvantage is that there is very little variety in the aesthetics of the ceiling system since most acoustical panels have the same general appearance, with another disadvantage residing in the fact that the panels are rigid and brittle so that they are easily breakable and, further, due to their rigidity, they are difficult to insert into the opening provided therefor inasmuch as the support bars must partially protrude into the opening in order to provide a support surface for the panels.

AU 80566 82A, upon which the precharacterising portion of appended claim 1 is based, describes a panel comprising two sheets of material separated by at least two resilient webs, the sheets being disposed in overlapping substantially parallel relation, the webs being adapted to normally support the sheets in a spaced condition and being.further adapted to permit relative movement of the sheets towards each other from said spaced condition when a compressive force is applied to the sheets transverse to the plane of the sheets and to return the sheets to the spaced condition on removal of the compressive force.

It is to overcome the shortcomings in prior art drop ceiling systems and to provide a new and improved cladding system for walls or ceilings that the present invention has been made.

### SUMMARY OF THE INVENTION

The present invention pertains to a new and improved ceiling panel, according to claim 1, and a drop ceiling system wherein a plurality of such flexible panels are preferably removably supported on a grid work of support bars. The support bars may be of inverted T-shaped cross-sectional configuration and form a matrix from longitudinally extending stringers and laterally extending cross-members. The flexible panels are sized to fit within the openings defined by the stringers and cross-members and rest upon ledges of the inverted T-shaped support members.

The panels according to claim 1 can take numerous configurations but include at least one sheet of somewhat rigid but flexible or foldable material preferably made of a fibrous material that is reinforced in one of numerous ways so that it can be folded or flexed while being inserted into an opening in the supporting grid work and subsequently unfolded above the grid work so that it can be easily positioned on the supporting grid work. In various disclosed embodiments, the panel can be made to be collapsible or compressible.

The sheet material is reinforced simply by a plurality of reinforcing members extended along an unexposed, or possibly even exposed, surface of the sheet material. Where multiple sheets of material are utilized, support members are provided for retaining the sheet materials in a desired spaced relationship.

The panels so formed provide adequate insulation and also, in most instances, provide an exposed planar surface that can be covered with a decorative film of various colors, grains or textural patterns to provide variety to the aesthetics of the ceiling system once it has been installed.

While the panels have been summarized and will be described hereafter in more detail as forming part of a ceiling system, it will be apparent to those skilled in the art that with modification of the support system the panels could also be used in the walls of a building structure.

Other aspects, features and details of the present invention can be more completely understood by reference to the following detailed description of a preferred embodiment, taken in conjunction with the drawings and from the appended claims.

### BRIEF DESCRIPTION OF THE DRAWINGS

The ceiling panels and ceiling systems of figure 18 to figure 80 do not form part of the claimed invention.
Fig. 1 is an isometric view of a panel formed in accordance with a first embodiment of the present invention.
Fig. 2 is a fragmentary isometric view looking upwardly at a drop ceiling system in accordance with the present invention utilizing the panels of Fig. 1.
Fig. 3 is an enlarged fragmentary section taken along line 3-3 of Fig. 2.
Fig. 4 is an enlarged side elevation of the panel of Fig. 1.
Fig. 5 is an enlargement of a section of Fig. 4 showing support members for the panel in dashed lines.
Fig. 6 is an enlarged fragmentary isometric view of the panel of Fig. 1.
Fig. 7 is a view similar to Fig. 6 with a support member of the type shown in dashed lines in Fig. 5 shown in solid lines.
Fig. 8 is a view similar to Fig. 5 with the panel being folded and with the support members shown in dashed lines where they would be incorporated if the panel were fully expanded as shown in Fig. 5.
Fig. 9 is a side elevation of the panel of Fig. 8 after having been fully folded into a flat condition.
Fig. 10 is a side elevation showing three panels in a fully folded condition and stacked upon each other.
Fig. 11 is a view similar to Fig. 5 showing the panel partially folded or bent which facilitates insertion of the panel into a position within the supporting grid work for the ceiling system.
Fig. 12 is a reduced side elevation similar to Fig. 11 again showing the panel slightly folded or bent.
Fig. 13 is an exploded isometric view of the panel of Fig. 1 but including a decorative film layer for covering the lower face of the panel of Fig. 1.
Fig. 14 is an enlarged view of the circled area of Fig. 13.
Fig. 15 is a side elevation of a panel as shown in Fig. 1 with end caps running along opposite ends of the panel to retain the panel in an expanded condition.
Fig. 16 is an enlarged fragmentary section taken along line 16-16 of Fig. 15.
Fig. 17 is a fragmentary isometric view with parts broken away of the panel shown in Figs. 15 and 16.
Fig. 18 is a side elevation of a second embodiment of a panel with the panel shown folded in dotted lines.
Fig. 19 is an enlarged fragmentary side elevation of a portion of the panel shown in Fig. 18.
Fig. 20 is a fragmentary isometric of the panel as shown in Fig. 19.
Fig. 21 is a side elevation of a third embodiment of a panel with the panel being similar to the panel shown in Fig. 18 but with a second parallel sheet of material.
Fig. 22 is an enlarged fragmentary side elevation of a portion of the panel of Fig. 21.
Fig. 23 is an enlarged fragmentary isometric view of the panel shown in Fig. 21.
Fig. 24 is a fragmentary isometric view of the reinforcement portion of the panel of Fig. 21 showing a first method of applying glue to the reinforcement.
Fig. 25 is a view similar to Fig. 24 with a second method of applying glue to the reinforcement material.
Fig. 26 is a view similar to Fig. 24 illustrating a third method of applying glue to the reinforcement.
Fig. 27 is a side elevation similar to Fig. 21 with the panel of Fig. 21 having been partially compressed.
Fig. 28 is an enlarged fragmentary section of the panel as seen in Fig. 27.
Fig. 29 is a fragmentary section similar to Fig. 28 with the panel having been further compressed.
Fig. 30 is an isometric view of the panel as shown in Fig. 27 partially compressed.
Fig. 31 is a side elevation of a fourth embodiment of a panel
Fig. 32 is an enlarged fragmentary section of a portion of the panel as shown in Fig. 31.
Fig. 33 is a fragmentary section similar to Fig. 32 with the panel partially compressed.
Fig. 34 is a fragmentary isometric of the panel shown in Fig. 31.
Fig. 35 is a side elevation of a fifth embodiment of a panel.
Fig. 35A is an enlargement of the circled area of Fig. 36.
Fig. 36 is an enlarged fragmentary section illustrating a portion of the panel shown in Fig. 35.
Fig. 37 is a fragmentary section similar to Fig. 36 with the panel having been partially compressed.
Fig. 38 is a fragmentary isometric of the panel shown in Fig. 35.
Fig. 39 is a side elevation of a sixth embodiment of a panel.
Fig. 40 is an enlarged fragmentary section of a portion of the panel shown in Fig. 39.
Fig. 41 is a fragmentary isometric of the portion of the panel shown in Fig. 40.
Fig. 42 is a side elevation of a panel similar to that shown in Fig. 39 with a parallel sheet of material added to the panel.
Fig. 43 is a fragmentary vertical section of a portion of the panel shown in Fig. 42.
Fig. 44 is a fragmentary isometric of the portion of the panel shown in Fig. 43.
Fig. 45 is a side elevation of the panel shown in Fig. 39 with a fold or curve formed in the panel.
Fig. 45A is an enlarged view similar to Fig. 45 showing the reinforcement portion of the panel of Fig. 45 in solid lines and parallel sheets connected to the reinforcement portion in dashed lines.
Fig. 46 is a fragmentary vertical section through a seventh embodiment of a panel.
Fig. 47 is an isometric view of an eighth embodiment of a panel.
Fig. 48 is an exploded isometric view of the panel shown in Fig. 47.
Fig. 49 is an isometric view of a secondary reinforcement strip used in the panel of Fig. 47.
Fig. 50 is an isometric view of the reinforcement structure for the panel shown in Fig. 47.
Fig. 51 is an isometric view of a sheet of material illustrating how the secondary reinforcement shown in Fig. 49 can be cut from such a sheet.
Fig. 52 is a side elevation of the panel shown in Fig. 47 looking upwardly and to the right from the lower lefthand side of the panel as shown in Fig. 47.
Fig. 53 is an enlarged section taken along line 53-53 of Fig. 52.
Fig. 54 is a section taken along line 54-54 of Fig. 53.
Fig. 55 is a section taken along line 55-55 of Fig. 56 and similar to Fig. 53 showing the panel partially compressed.
Fig. 56 is a section taken along line 56-56 of Fig. 55 and being similar to Fig. 54 with the panel partially compressed.
Fig. 57 is a side elevation of a ninth embodiment of a panel.
Fig. 58 is a fragmentary vertical section taken through a portion of the panel shown in Fig. 57.
Fig. 59 is a fragmentary isometric of the portion ofthe panel illustrated in Fig. 58.
Fig. 60 is a side elevation of a tenth embodiment of a panel.
Fig. 61 is a fragmentary vertical section taken through the panel of Fig. 60.
Fig. 62 is a fragmentary isometric showing the portion of the panel illustrated in Fig. 61.
Fig. 63 is a side elevation of an eleventh embodiment of a panel.
Fig. 64 is an enlarged fragmentary vertical section showing a portion of the panel of Fig. 63.
Fig. 65 is a fragmentary isometric showing the portion of the panel illustrated in Fig. 64.
Fig. 66 is a side elevation of a twelfth embodiment of a panel.
Fig. 67 is an enlarged vertical section taken through a portion of the panel shown in Fig. 66.
Fig. 68 is a fragmentary isometric view illustrating the portion ofthe panel shown in Fig. 67.
Fig. 69 is a side elevation of a thirteenth embodiment of a panel.
Fig. 70 is an enlarged vertical section taken through a portion of the panel shown in Fig. 69.
Fig. 71 is a fragmentary isometric illustrating the portion of the panel shown in Fig. 70.
Fig. 72 is a side elevation of a fourteenth embodiment of a panel.
Fig. 73 is an enlarged vertical section taken through a portion of the panel shown in Fig. 72.
Fig. 74 is a vertical section similar to Fig. 73 showing the panel partially compressed.
Fig. 75 is a fragmentary isometric of the portion of the panel shown in Figs. 73 and 74.
Fig. 76 is a side elevation of a fifteenth embodiment of a panel.
Fig. 77 is an enlarged vertical section taken through a portion of the panel shown in Fig. 76.
Fig. 78 is a vertical section similar to Fig. 77 showing the panel partially compressed.
Fig. 79 is a fragmentary isometric of the portion of the panel shown in Figs. 77 and 78.
Fig. 80 is a fragmentary isometric view of a support member adapted for use in connection with the panel shown in Fig. 60.
Fig. 81 is an end elevation of the support member shown in Fig. 80.
Fig. 82 is an end elevation of the support member incorporated into the panel of Fig. 60.
Fig. 83 is a side elevation of the panel of Fig.60 with the support member of Fig. 80 incorporated therein.

### DESCRIPTION OF THE PREFERRED EMBODIMENTS

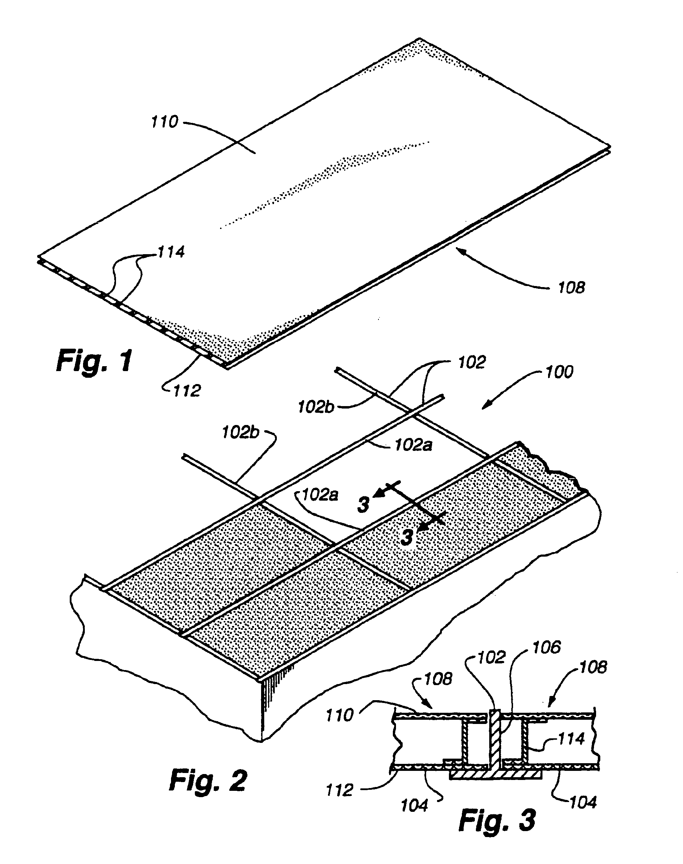

A drop ceiling system 100 in accordance with the present invention utilizes a conventional suspension system of elongated crisscrossing support members 102 forming a matrix defining openings that are usually rectangular in shape in which a panel in accordance with the present invention can be disposed. The support members typically consist of horizontally disposed elongated stringers 102a that are suspended in a conventional manner and in parallel relationship in one direction across a ceiling structure usually at a vertical spacing of four to six inches from the substructure of the building structure in which the ceiling system is mounted. A plurality of horizontal cross-support members 102b extend in parallel relationship and perpendicularly to the stringers so that the quadrangular openings are defined therebetween. The cross-members are also suspended at the same elevation as the stringers. The stringers and cross-members are of inverted T-shaped cross-section as illustrated in Fig. 3 so as to define horizontal shoulders 104 on either side of a vertical body 106, with the shoulders being adapted to support a peripheral edge of a panel formed in accordance with the present invention. As will be appreciated, the T-shaped support members 102 extend peripherally around each quadrangular opening so that a shoulder is provided to support an entire peripheral edge of a panel.

Other types of suspension systems could be utilized, but a suspension system of the type described has proven to be very functional.

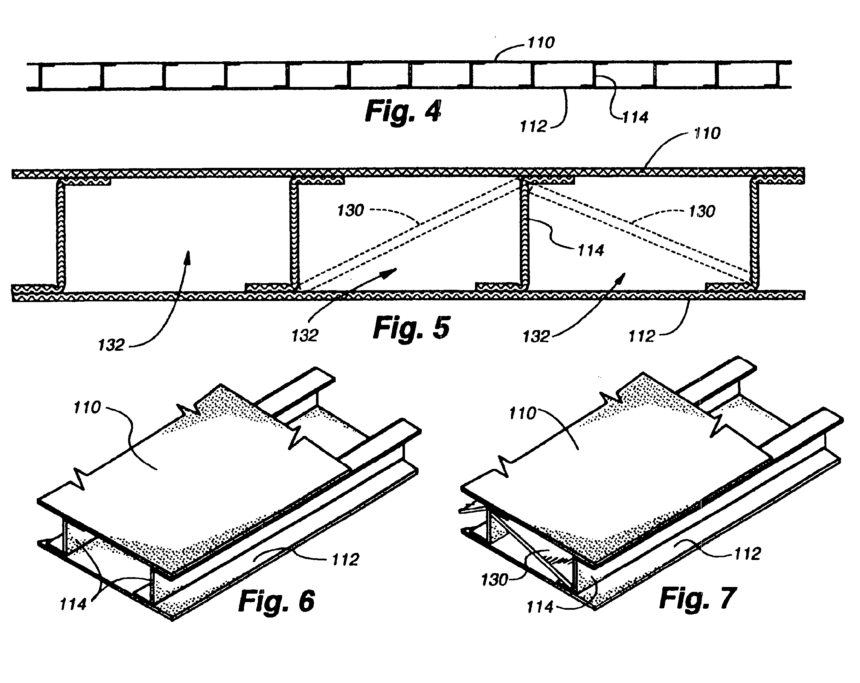

A first embodiment 108 of a panel in accordance with the present invention is illustrated in Figs. 1-17. As probably best seen in Fig. 5, each panel 108 includes an upper planar sheet 110, a lower planar sheet 112 and a plurality of parallel reinforcement members 114 of substantially S-shaped cross-section. The upper and lower planar sheets as well as the reinforcement members are made of a somewhat rigid material that can be flexed. A material that has worked for this purpose is a non-woven fabric of heat resistant fibers bound together by a heat moldable polymeric resin matrix or a thermal setting resin matrix. For example, fiberglass fibers embedded in an acrylic resin will work for this purpose with the fibers preferably being relatively long and thin. The length of the glass fibers would be at least 1/4 inch, but preferably ½ inch and especially at least one inch. The thickness of the glass fibers would be no less than 7 microns and no more than 100 microns but preferably no more than 32 microns and especially 10-16 microns. A material found suitable for this purpose is 100GSM glass mat #8802 manufactured by Johns Manville of Waterville, Ohio, or an alternative would be materials available from OJI Glasspen in Japan and Ahlstrom in Finland.

The upper and lower sheets of material are cut to a predetermined size which corresponds with the area defined by the stringers 102a and cross-members 102b of the support system. As will be appreciated, the upper and lower sheets of material are retained in a parallel and separated relationship by the reinforcement members 114 which are formed from elongated strips of material 116 that are pre-creased at predetermined locations so that they can be folded at right angles at those locations. The strips of material are also cut to pre-determined lengths to form the reinforcement members.

The creases are provided at the locations where the strip material 116 is to be folded and these locations are spaced from each edge of the strip approximately one-quarter of the full width of the strip. In this manner, when the strips are folded as illustrated in Fig. 5, they define an upper flap 124 and a lower flap 126 and an intermediate body 128 which is approximately twice the width of each of the flaps. The crease lines, of course, allow the flaps to be folded relative to the intermediate body. By taking care when creasing the strips that the glass fibers not be damaged, alternative means for maintaining resiliency in the strip material need not be employed as the glass fibers provide the desired resiliency in the material. Each flap is provided with an adhesive on its outer surface to engage the adjacent sheet material 110 or 112 so as to be securely bonded thereto. The adhesive could take numerous forms but a porous adhesive made by EMS-Chemie AG of Domat/Ems, Switzerland and designated flame resistant co-polyester adhesive #1533 has been found acceptable.

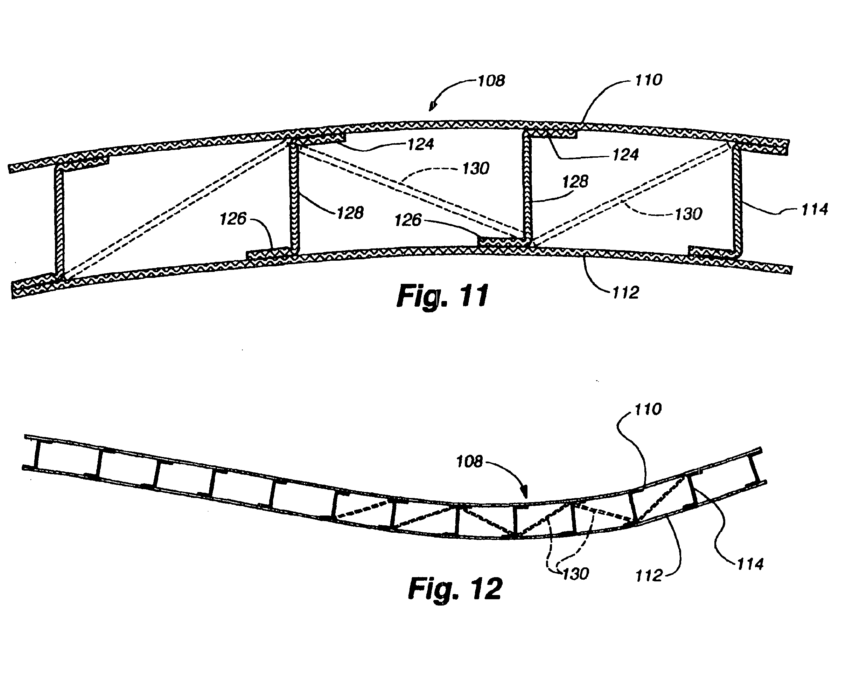

As will be appreciated, due to the creases in the reinforcement members, and the capability of the strip material 116 to bend along these creases, the reinforcement members by themselves may not necessarily retain the sheet material 110, 112 in spaced relationship rendering the panel collapsible by moving the sheets of material toward each other while they slightly shift laterally relating to each other. To prevent collapsing, diagonal support members 130 of a more rigid plastic material or conceivably the same glass fiber reinforced resin material maybe diagonally inserted into each cell 132 defined between the sheet material and adjacent reinforcement members. These support members 130 are illustrated in dashed lines in Fig. 5 and in full lines in Fig. 7. The support members can be inserted in every cell or in spaced cells as is necessary to support the panel as desired. Even with the support members inserted in each cell, however, the panel can be slightly flexed or bent as illustrated in Figs. 11 or 12. As will be appreciated, due to the flexibility of the panels, they can be easily inserted into the openings between the stringers 102a and cross-members 102b even though the overall fully extended size of the panel 108 is substantially equal to the size of that opening. This, of course, provides a distinct advantage over systems in the prior art where rigid panels that could not be bent or flexed have to be inserted into an opening of about the same size.

By inserting support members at specified selected locations, but not in all the cells, the panel will take a curved shape that may be useful or appealing in some situations.

The reinforcement members 114 can be adhesively bonded to the sheet material 110, 112 in any suitable manner but, by way of example, the adhesive could be provided to cover the entire face of a flap 124 or 126, could be provided in continuous lines along the flap but not of the full width of the flap, could be provided in intermittent lines along the flap or other such applications. It is conceivable that the reinforcement member could also be heat welded or ultrasonically bonded to the sheet material as well.

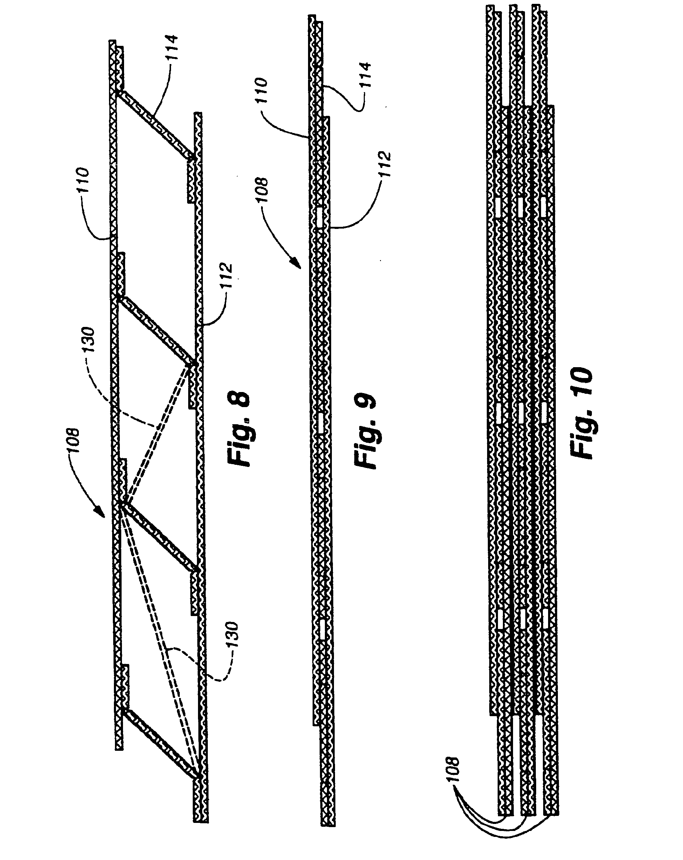

It will be appreciated by reference to Figs. 8-10 that by removing the support strips 130 from each cell, the panel 108 can be collapsed by folding the reinforcement members 114 along their creases 122 so that the reinforcement members are flattened and extend in parallel relationship with the upper and lower sheets 110 and 112, respectively, as illustrated in Fig. 9. In this configuration, panels can be stacked as illustrated in Fig. 10 into a small area for shipping purposes thereby saving considerable expense when shipping panels for use in a drop ceiling system.

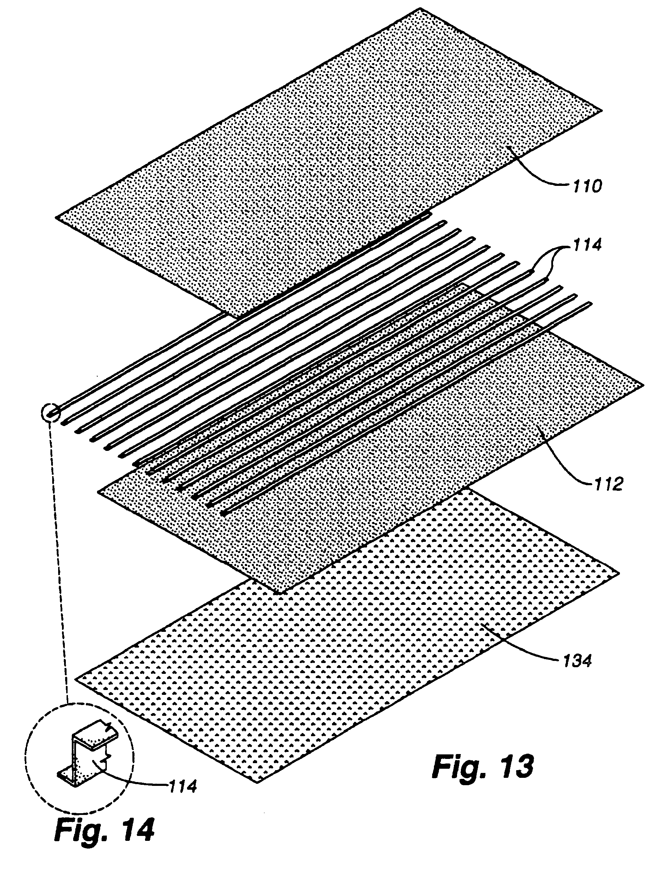

With reference to Fig. 13, it will be appreciated that the panel 108 as described above can be modified by incorporating a decorative continuous layer of elastomeric polymer, preferably a thermoplastic or thermosetting polymeric film 134 or the like, such as a urethane or neoprene film, to the lower exposed face of the lower sheet 112, which face is the face that is exposed to the interior of the room in which the ceiling system is mounted. The film material can be simply a flat sheet of colored material, could be furrowed or otherwise embossed with a pattern, or could have a wood grain or other decorative pattern imprinted thereon. There are numerous possibilities for decorating the lower surface of the panel and this film or related sheet of material can be adhesively or otherwise secured to the panel along the bottom face of the lower sheet of material 112 of the panel. A decorative film as described above or other material may also be applied to the other panel embodiments of this invention, which are described below.

Examples of decorative coverings or films would be:
a) supported vinyl wall coverings made by Gen Corp. of Columbus, Miss.
b) unsupported vinyl films as used in wrapping operations from Alkor Draka of
   Munich, Germany.
c) flame resistant papers made by Pallas Inc. of Green Bay, Wisconsin.
d) flame resistant papers made by Permalin Products Co. of New York, New York.
e) woven fiberglass mat from Johns Manville of Waterville, Ohio.
f) a flame resistant non-woven #TR2315B-1 from H & V of Floyd, VA which has been quilted by Hunter Douglas Inc. of Broomfield, Colorado.
g) a flame resistant glass paint on a glass non-woven fabric with the paint being manufactured by Keim of Holland. The glass non-woven fabric would come from Alkstrom of Finland.

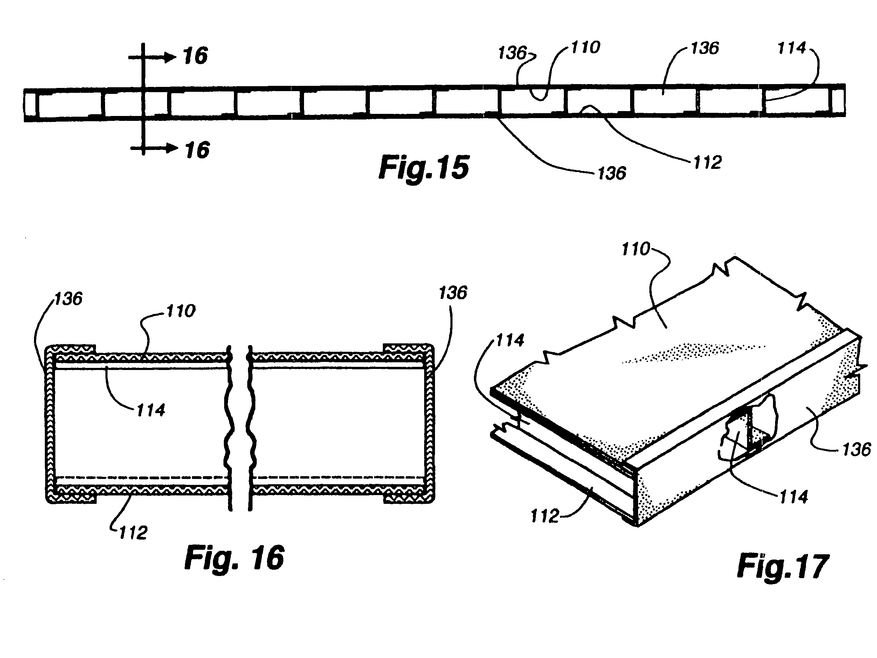

As an alternative to the diagonal support members shown in dashed lines in Fig. 5, elongated end caps 136 as shown in Figs. 15-17 could be utilized. These end caps could simply be elongated U-shaped channel members of a rigid material which are adapted to fit snugly over the end of the aforedescribed panel 108 in perpendicular relationship to the longitudinal direction of the reinforcement members 114. As will be appreciated, the end caps prevent the panel from collapsing, as illustrated in Figs. 8 and 9, and, of course, could be removed from the panel for shipping purposes and installed on the panel once the panels were ready for installation in a ceiling system. As an alternative the end caps could also be slit to fit within the open end of the panel instead of around the end. By way of example, the end caps could be made of a flame resistant polycarbonate or aluminum and adhesively secured to the panels 108.

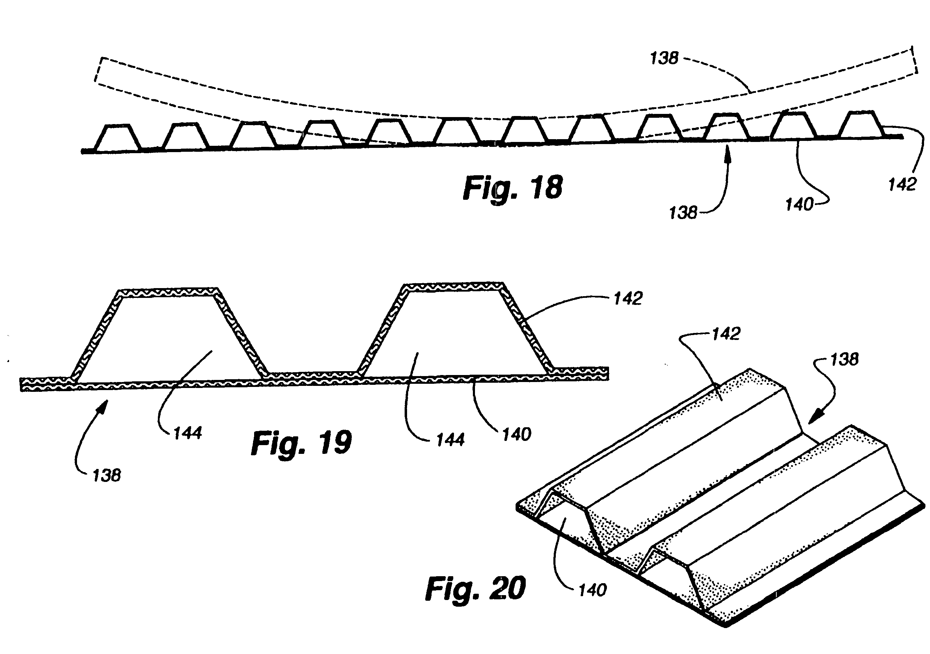

Figs. 18-20 illustrate a second embodiment 138 of a panel wherein a lower sheet material 140 is reinforced principally in one direction by a furrowed reinforcing sheet 142 that is folded as illustrated in Fig. 19 to define upwardly and downwardly opening trapezoidal channels 144. The trapezoidal channels would be bonded where the reinforcement member is in contiguous abutting face-to-face relationship with the lower sheet material 140. As mentioned previously, the bonding could be done in any variety of ways so long as a positive bond was provided between the reinforcing member and the lower sheet material. As will be appreciated, with an arrangement of this type, the panel can be flexed upwardly in a smooth curve, as illustrated in Fig. 18, and to a smaller degree downwardly but only in one direction of the panel. The trapezoidal channels 144 substantially prevent flexing in a transverse direction to that illustrated. This ability to flex the panel, however, allows the panel to be easily inserted into the opening between the stringers 102a and cross-members 102b in the support structure for the ceiling system. The stiffness of the panel can also be adjusted by the stiffness or rigidity of the lower sheet material 140.

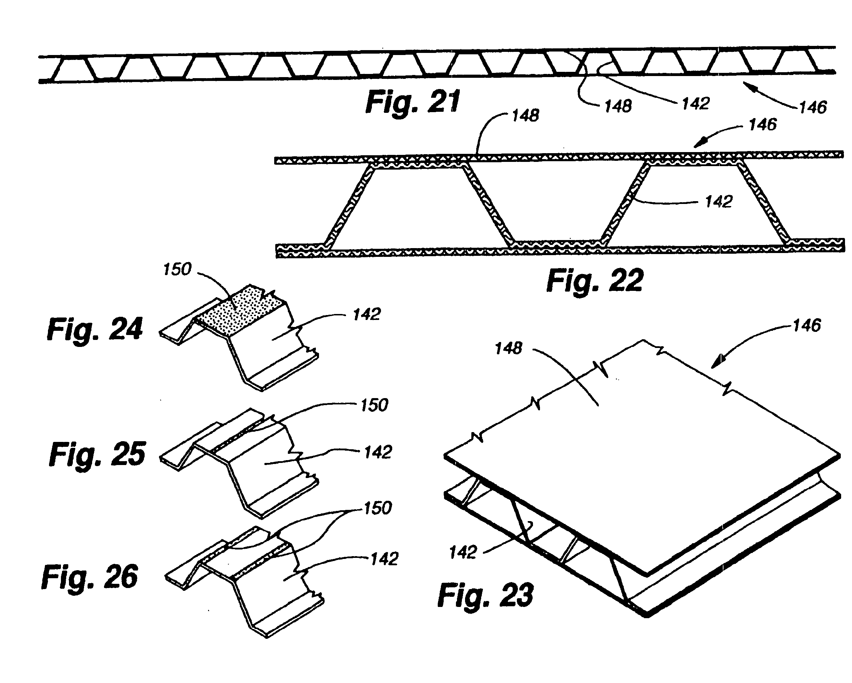

In a third embodiment 146, seen in Figs. 21-30, the ceiling panel 146 is formed similarly to the panel illustrated in Figs. 18-20 but wherein an upper sheet material 148 is secured to the trapezoidal reinforcement member 142 along the top surface of the trapezoidal member. The upper sheet material can be adhesively bonded or otherwise secured to the reinforcement member in the same or similar manner as the reinforcement member was secured to the lower sheet material 140. As illustrated in Fig. 24, the bonding of the reinforcement member 142 to the sheet material can be with a full layer of adhesive 150 or, as illustrated in Fig. 25, with a single line of adhesive 150 or, as illustrated in Fig. 26, with parallel lines of adhesive 150 or, as mentioned previously, many other methods of applying adhesive such as intermittently or in dots or the like could also be employed. Again, heat welding or ultrasonic bonding may also be appropriate.

The completed panel 146 is probably best seen in Fig. 23 and, again, will bend or flex in one direction of the panel but is substantially prevented from flexing in a lateral or perpendicular direction due to the trapezoidally shaped channels of the reinforcement member 142. The reinforcement member can be formed from a sheet of material that has been creased in opposite faces at spaced parallel locations and subsequently folded.

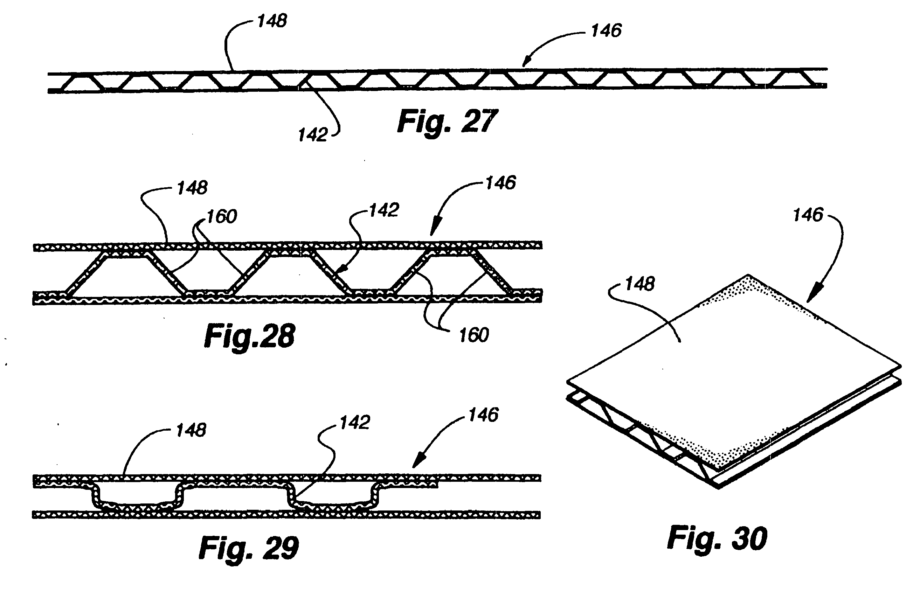

The panel 146 can be compressed for shipping purposes, as illustrated in Figs. 27-30, with a slight amount of compression probably not appreciably changing the configuration of the panel other than to make it slightly thinner, but further compression causing the straight faces 160 of the reinforcement member to buckle or fold into the contoured configuration shown in Fig. 29. Accordingly, the panels can be forcibly compressed for shipping purposes so as not to occupy as much space within a shipping container and by utilizing an appropriate material for the panels, such as a glass reinforced resin as described previously, the panels will reassume their normal configuration of Figs. 21 and 22.

For purposes of the present disclosure, the term "compression" refers to reducing the thickness of a panel without allowing the upper and lower sheets to shift laterally relative to each other while the term "collapsing" refers to reducing the thickness of a panel while permitting lateral shifting ofthe upper and lower sheets relative to each other. If there were no upper sheet, such as in the embodiment shown in Figs. 18-20, "compression" would occur if the furrowed reinforcing sheet were not allowed to fold laterally as if it were "collapsing" but rather was buckled straight downwardly.

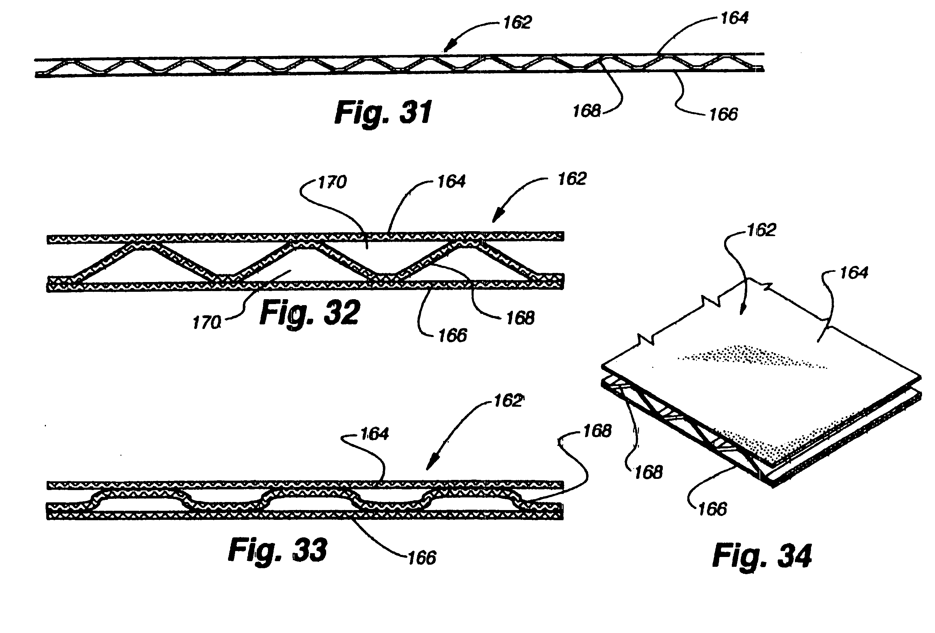

Fig. 31 illustrates a fourth embodiment 162 where, again, upper and lower planar sheets of material 164 and 166, respectively, are separated by a furrowed reinforcement member 168 that defines upwardly and downwardly opening channels 170 of trapezoidal cross-section but in this embodiment, the engagement area of the reinforcement member 168 with each planar sheet member 164, 166 is less than the corresponding engagement areas of the panel shown in Figs. 21 and 22. This allows for a more compressible panel and as will be appreciated, by varying the area of engagement between the reinforcement member and the planar sheet members, the compressibility of the panel can be regulated. Fig. 33 shows the panel 162 in a somewhat compressed configuration but when utilizing appropriate resilient materials, the panel will return to the normal configuration illustrated in Fig. 32 upon the release of pressure due to the resiliency of the material utilized.

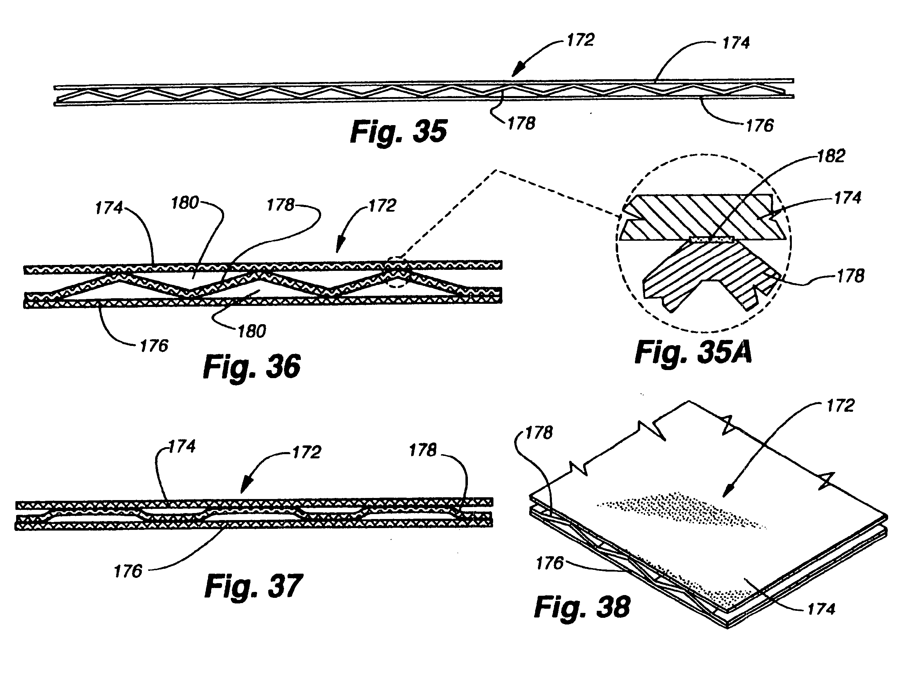

Figs. 35-38 illustrate a fifth embodiment 172 which is somewhat similar to those shown in Figs. 21-22 and 31-32 so as to include upper and lower sheets of planar material 174 and 176, respectively, and a reinforcing member 178 therebetween but wherein the reinforcing member is defined by upwardly and downwardly opening channels 180 that are of substantially triangular configuration. In this arrangement, the engagement of the reinforcing member 178 with each planar sheet material 174, 176 is a relatively small area which allows even more compressibility of the panel. Fig. 35A is an enlargement of the circled area in Fig. 36 and shows a line of adhesive 182 along a substantially pointed line of engagement of the reinforcement member 178 with the upper planar sheet member 174.

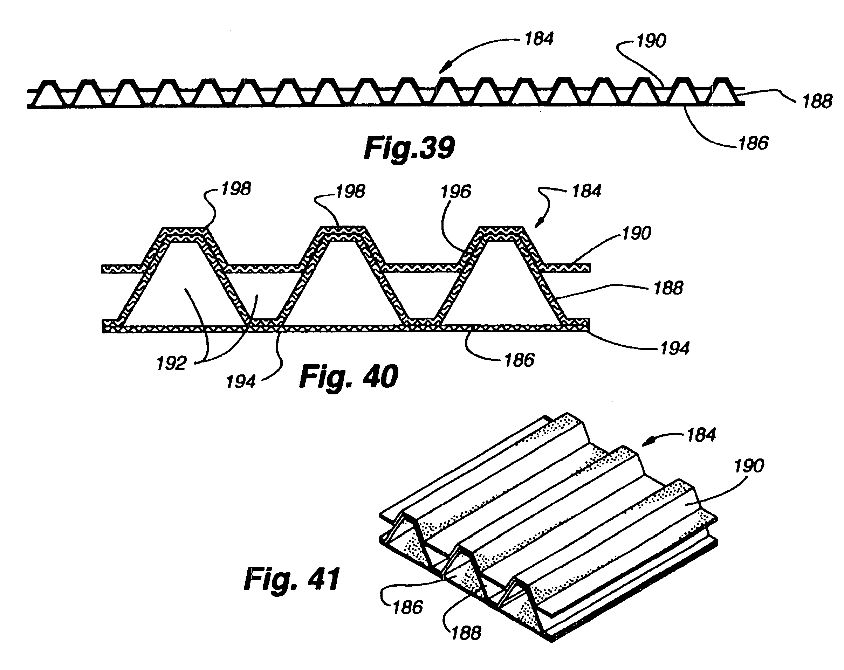

A sixth embodiment 184 of the panel of the present invention is illustrated in Figs. 39-41 and can be seen to include a lower planar sheet material 186, a primary reinforcement member 188 substantially of the type shown in Fig. 18, and a secondary reinforcement member 190 overlaid on the primary reinforcement member 188.

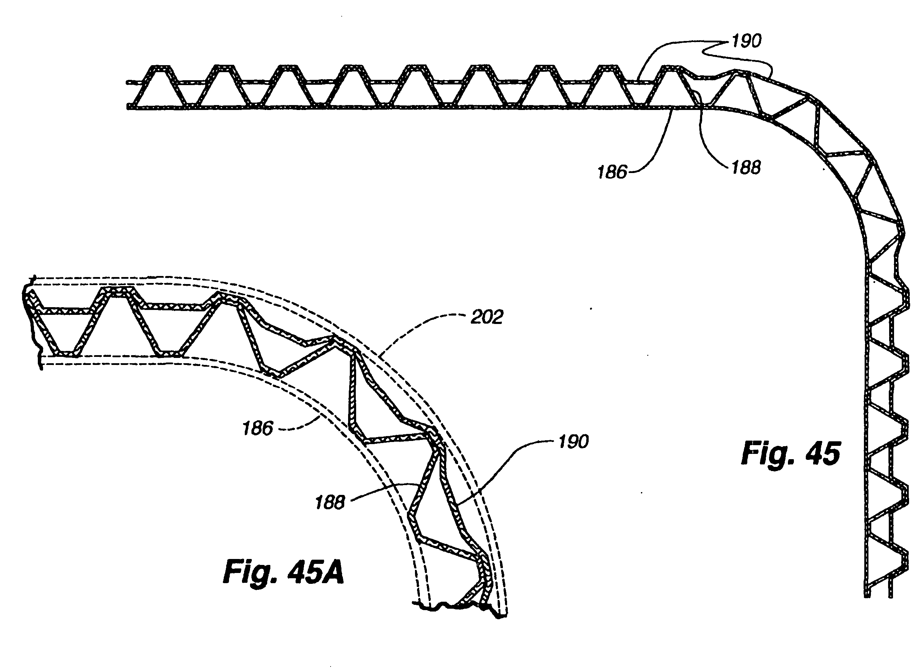

The primary reinforcement member 188 defines upwardly and downwardly opening channels 192 of trapezoidal cross-sectional configuration and is bonded to the lower planar sheet material 186 along areas of engagement 194. The secondary reinforcement member 190 is overlaid across the top of the primary reinforcement member and also defines upwardly and downwardly opening channels 196 of trapezoidal configuration but wherein the upwardly opening channels are wider than the downwardly opening channels. The downwardly opening channels are sized to conform with and receive the uppermost structure of a downwardly opening channel of the primary reinforcement member 188. The upwardly opening channels of the secondary reinforcement member 190 are adapted to be received in an upwardly opening channel of the primary reinforcement member. The secondary reinforcement member is secured to the primary reinforcement member in any suitable manner such as with adhesive and either continuously or at intermittent locations only along horizontal areas of engagement 198. The panel so formed, again, will flex in one direction but not as readily flex in the lateral transverse direction and Fig. 45 illustrates the panel when so flexed. It will be appreciated that the secondary reinforcement member flexes outwardly across the upwardly opening channels 192 of the primary reinforcement member to allow for the bend in the panel. This, of course, is permitted due to the fact that the secondary reinforcement member is not bonded to the primary reinforcement member in the upwardly opening channels of the primary reinforcement member but only along the top or horizontal areas of engagement 198 with the primary reinforcement member.

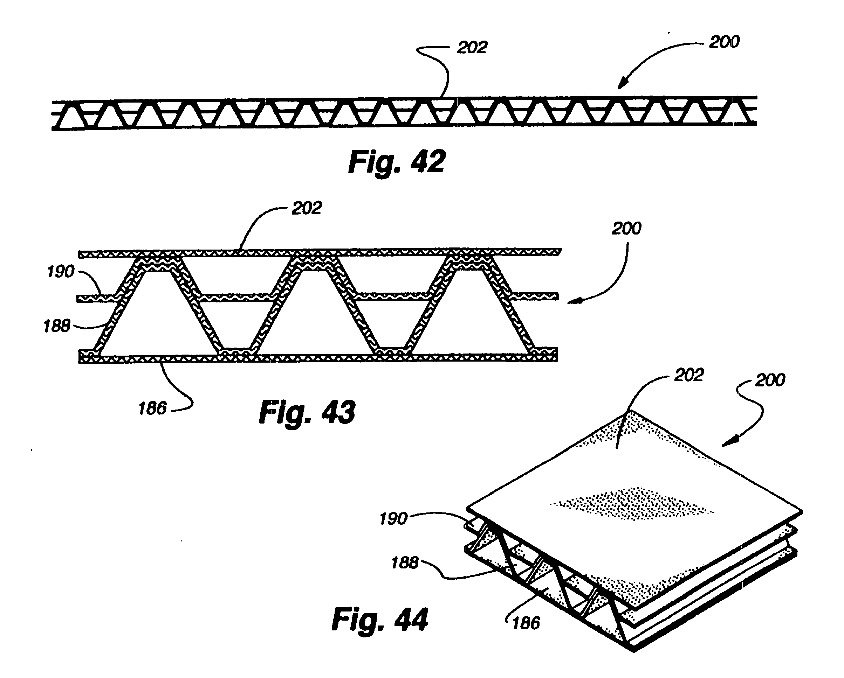

Figs. 42-44 illustrate an alterative arrangement 200 to the panel illustrated in Figs. 39 and 40, with this alternative arrangement being identical to the arrangement shown in Figs. 39 and 40 but wherein an is bonded to the secondary reinforcement member 190 in parallel relationship with the lower planar sheet member 186. A panel so formed could also be bent as illustrated in Fig. 45A where the planar sheet members 186 and 202 are illustrated in dashed lines.

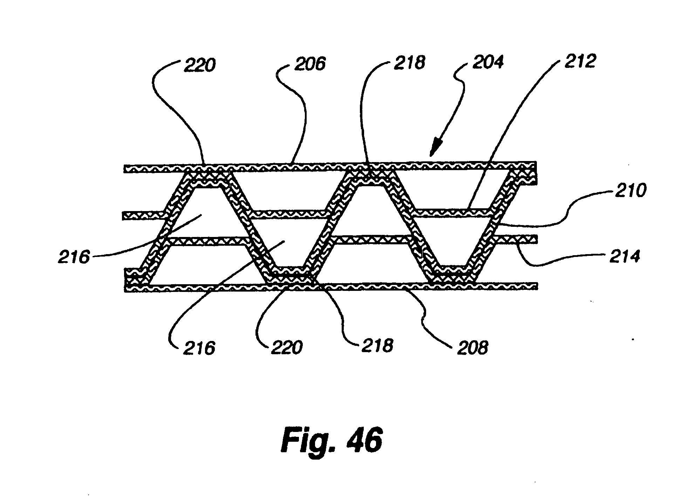

Fig. 46 illustrates a seventh embodiment 204 of a panel wherein the panel 204 includes upper and lower planar sheets of material 206 and 208, respectively, a primary reinforcement member 210 and a pair of upper and lower secondary reinforcement members 212 and 214, respectively. The primary reinforcement member has upwardly and downwardly opening channels 216 of trapezoidal configuration but the primary reinforcement member is not directly attached to the planar sheet materials. Rather, the secondary reinforcement members 212 and 214, respectively, are secured to the primary reinforcement member 210 along horizontal interfaces 218 between the respective members and, in turn, the secondary reinforcement members are secured to the planar sheet members along horizontal engagement areas 220. The secondary reinforcement members are identical to each other but inverted relative to each other so as to be secured to the primary reinforcement member across the top and bottom thereof substantially as described previously in connection with the embodiment shown in Figs. 39 and 40.

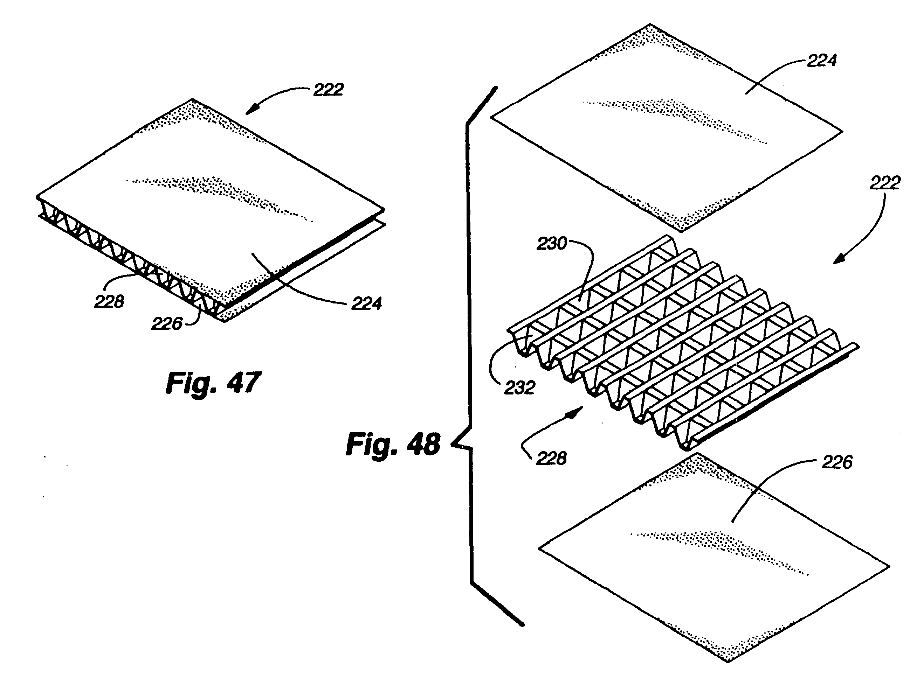

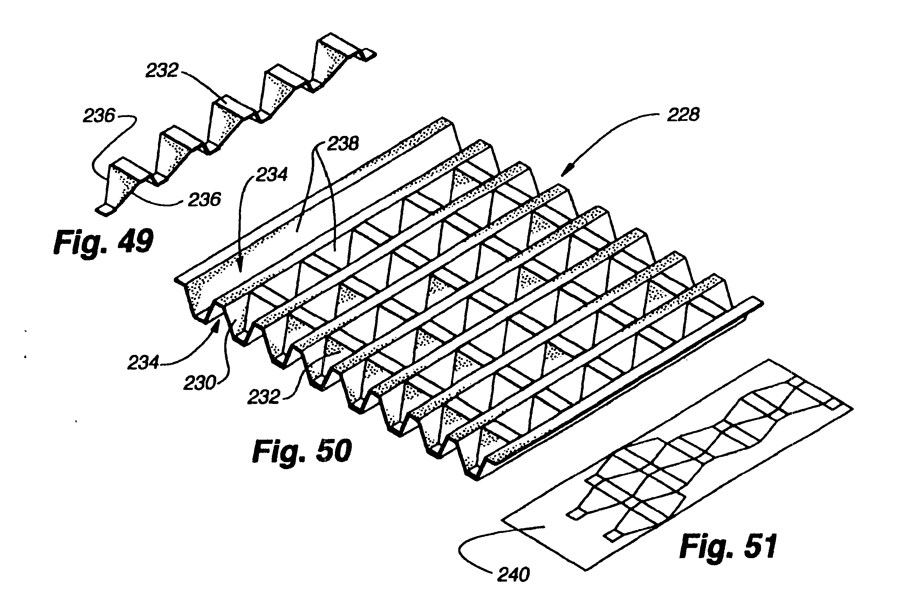

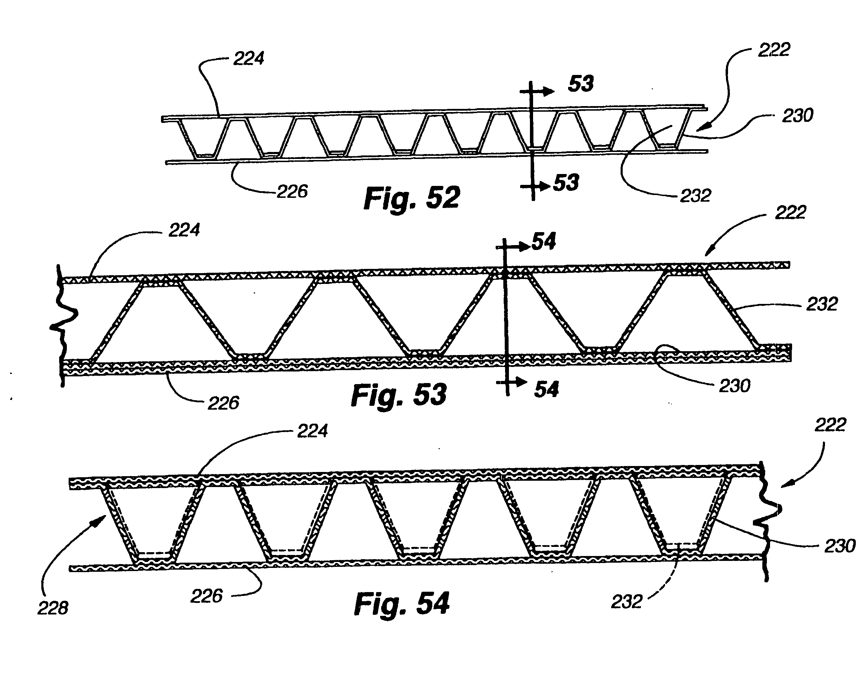

Figs. 47-56 illustrate an eighth embodiment 222 wherein a pair of parallel planar sheets 224 and 226 are interconnected by a reinforcement member 228 that includes a primary reinforcement portion 230 and secondary reinforcement portions 232 which provide rigidity in a transverse direction to the primary portion. As best illustrated in Figs. 49 and 50, the primary reinforcement portion 230 is a furrowed member substantially the same as the primary reinforcement member of Fig. 39 thereby defining upwardly and downwardly opening channels 234 of trapezoidal cross-section. The secondary reinforcement portions 232 are insert strips, as illustrated in Fig. 49, that are adapted to be received in the upwardly opening channels of the primary reinforcement portion. Each secondary reinforcement strip has a cross-sectional configuration substantially identical to that of the primary portion, but the planar side walls 236 of the strip, which extend perpendicularly to the channels in the primary reinforcement portion, are tapered so as to converge downwardly thereby to conform with the downwardly convergent walls 238 of the upwardly opening channels of the primary portion of the reinforcement member. Accordingly, when the secondary reinforcement strips are positioned within the upwardly opening channels of the primary reinforcement portion, the reinforcement member is structured as illustrated in Fig. 50, and it will be appreciated that the panel has substantial rigidity in both longitudinal and transverse directions even though a slight degree of flexing is achievable due to the characteristics of the material from which the reinforcement member is made.

Fig. 51 illustrates a sheet of material 240 from which the secondary reinforcement portions can be cut and folded and as will be appreciated, a number of such strips 232 can be cut in a complimentary manner from the same sheet of material.

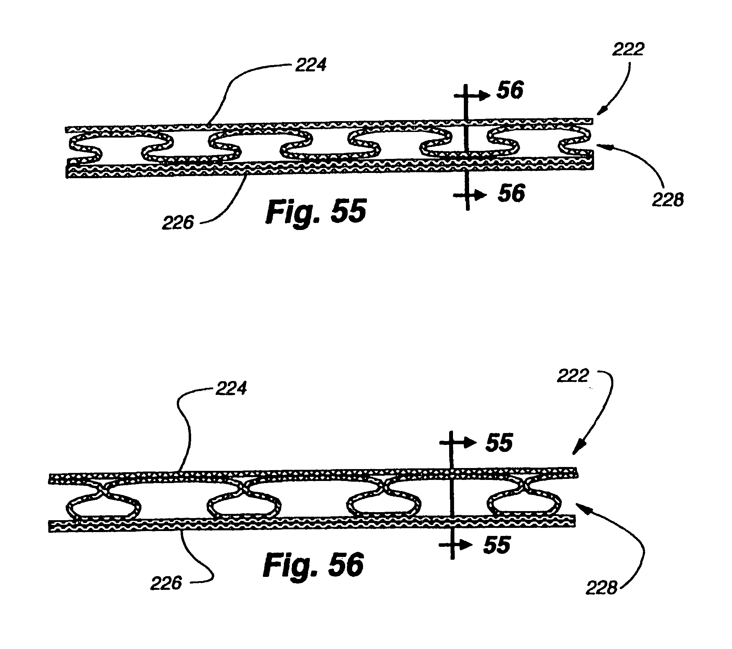

Figs. 55 and 56 illustrate the compressible nature of the panel 222 which is permitted due to the flexible nature of the material from which the reinforcement member 228 is made and as will be appreciated, depending upon the amount of pressure applied to the planar sheet members 224 and 226, the reinforcement members will buckle into the contoured configuration illustrated allowing the panel to assume a thinner or shallower cross-section, again, for shipping purposes. In other words, the panels can be forcibly compressed into containers for shipment so as to occupy a minimal amount of space compared to that which would be occupied by the fully expanded panel.

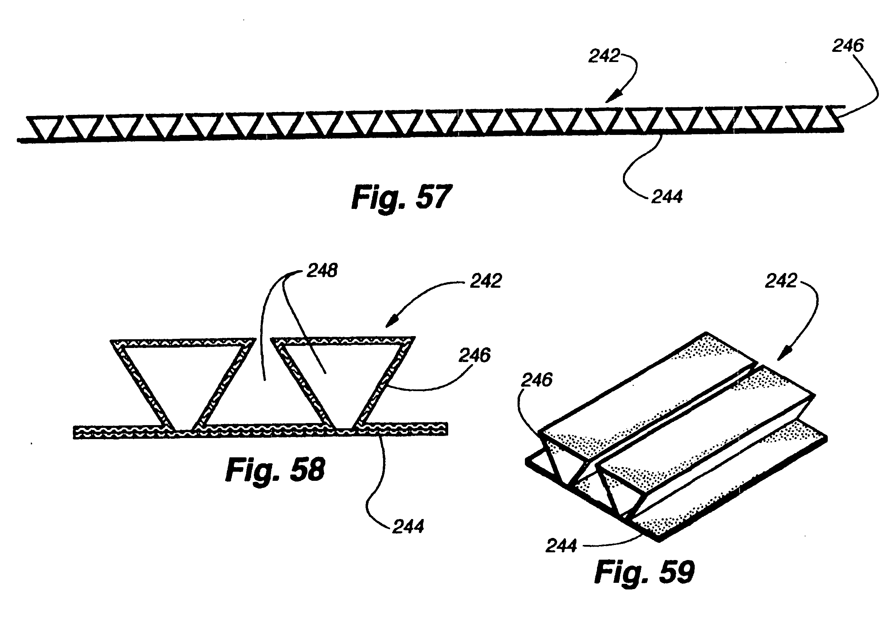

Figs. 57-59 illustrate a ninth embodiment 242 of the panel which includes a lower planar sheet of material 244 and a reinforcement member 246 bonded or otherwise secured to the upper surface thereof to permit easy flexing of the panel in a downward direction but the reinforcement member resists flexing of the panel in an upwardly direction and transverse directions. The reinforcement member has alternate upwardly and downwardly opening channels 248 of trapezoidal cross-sectional configuration but the opening of each channel is significantly narrower than the opposed closed side of the same channel. As will be appreciated, the panel would be allowed to flex readily in a downward direction but not so readily in an upward direction and not so readily in a transverse direction. The reinforcement member is secured to the planar sheet material along areas of engagement in any suitable manner which could include adhesive applied in lines, continuously across the areas of engagement, along intermittent lines or dots or the like.

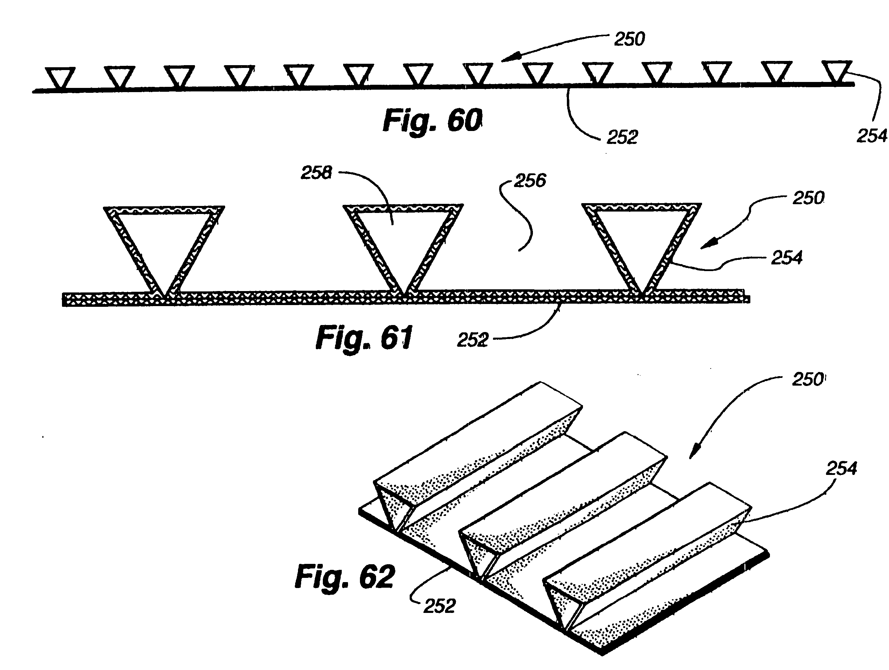

A tenth embodiment 250 of a panel formed is illustrated in Figs. 60-62. In this embodiment, a planar sheet of material 252 is bonded or otherwise secured in a suitable manner to an overlying reinforcement member 254 that is similar to the reinforcement member shown in the embodiment illustrated in Fig. 58 but wherein the upwardly opening trapezoidal channels 256 of the reinforcement member are significantly wider than the downwardly opening channels 258. This arrangement would permit not only flexing in the downward direction but also more flexing in the upward direction than would be permitted by the embodiment shown in Figs. 57-59. The lower exposed face of the sheet 252, which face is exposed to the interior of the room in which the ceiling system is mounted, can be modified by providing it with a continuous elastomeric polymer (not shown). Preferably, the elastomeric polymer is a thermoplastic or thermosetting polymeric film, such as a urethane or neoprene film, as described previously with reference to Fig. 14, or a urethane or neoprene adhesive that bonds a decorative film, as described above with reference to Fig. 14, on the lower face of the sheet 252. The elastomeric polymer allows the panel 250 to be substantially flexed or bent without visible creasing of the sheet 252. As a result, the panel 250 can be manufactured in long lengths which can be stored and shipped in rolled-up form and then unrolled and cut to length for installation.

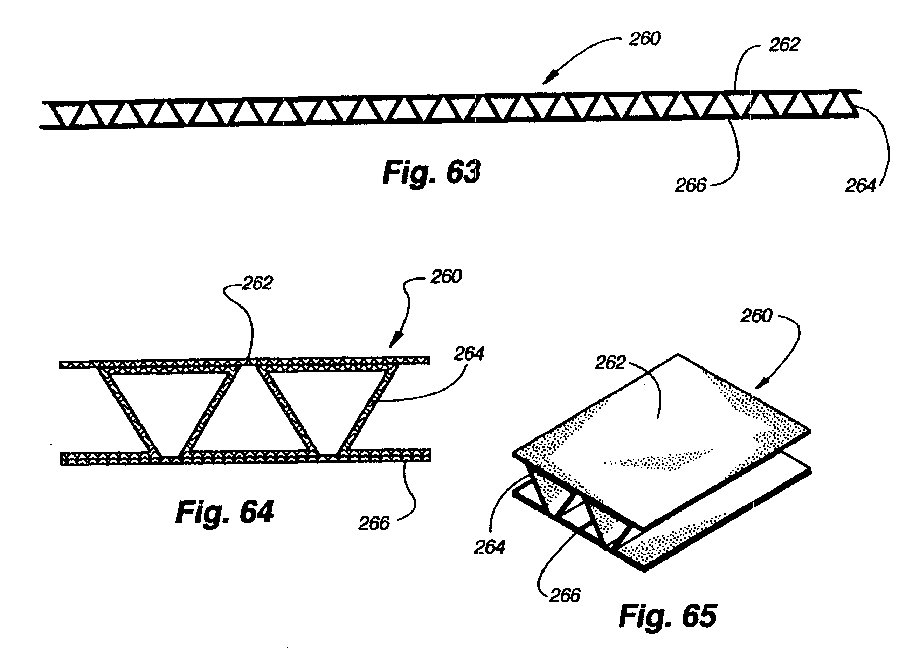

An eleventh embodiment 260 of a panel is illustrated in Figs. 63-65. This embodiment is identical to that illustrated in Figs. 57-59 except that an upper planar sheet of material 262 is secured to a reinforcement member 264 across the top of the reinforcement member in the same or similar manner to which a bottom sheet material 266 is secured to the lower surface of the reinforcement member. This panel would have similar behavioral characteristics to that of the panel illustrated in Fig. 58 but would have slightly more rigidity and better insulating qualities.

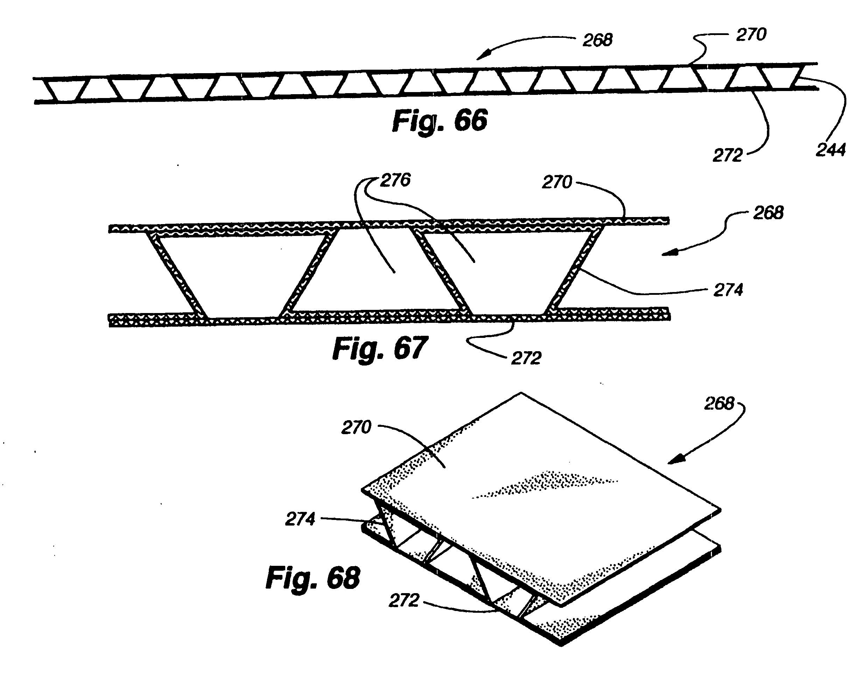

Figs. 66-68 illustrate a twelfth embodiment 268 of a panel, with this embodiment including upper and lower planar sheets of material 270 and 272, respectively, that are secured to and separated by a reinforcement member 274 having upwardly and downwardly opening channels 276 of transverse trapezoidal configuration. The reinforcement member is similar to that of Fig. 58 except that the trapezoidal cross-section is slightly enlarged so that the opening of the trapezoidal channels in both the upward and downward directions is slightly greater than that of the reinforcement member of Fig. 58.

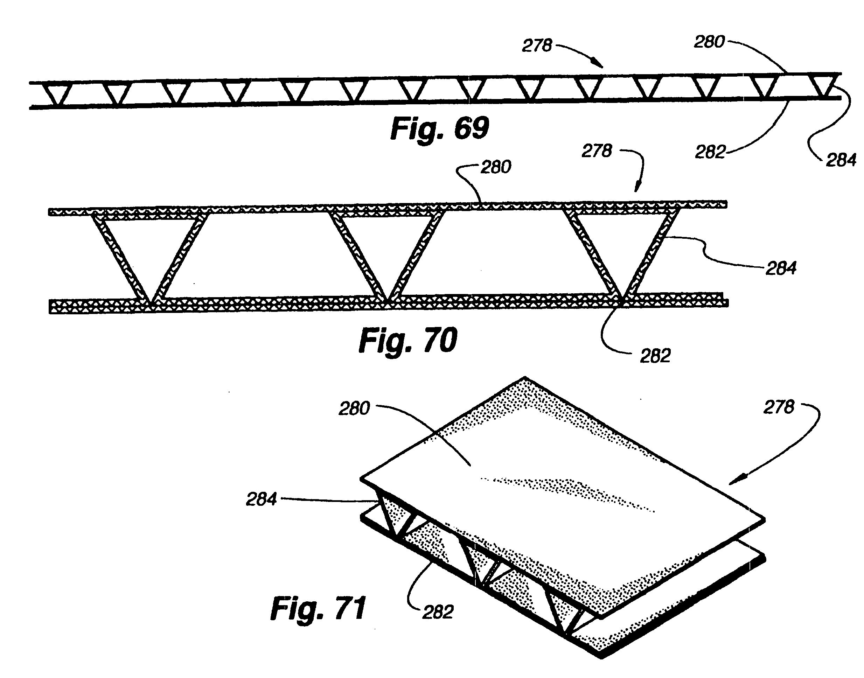

A thirteenth embodiment 278 of a panel formed is illustrated in Figs. 69-71, with this panel, including upper and lower planar sheet materials 280 and 282, respectively, that are interconnected by and spaced by a reinforcement member 284. The reinforcement member is substantially identical to that illustrated in the embodiment of Figs. 60 and 61.

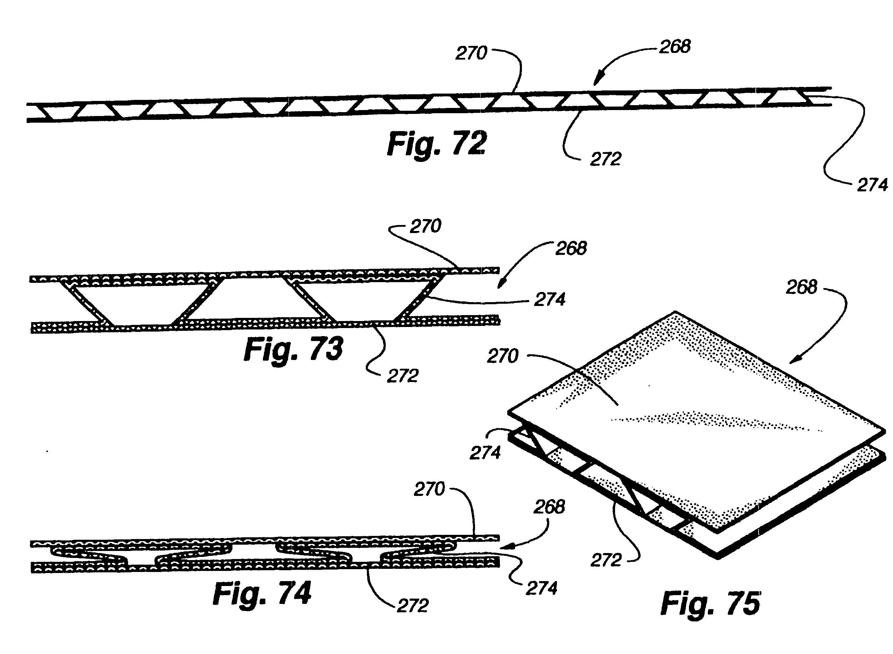

Figs. 72-75 illustrate the compressibility of the panel 268 described previously in connection with Figs. 66-68 and wherein it will be appreciated in Fig. 73 that the panel can be compressed a slight amount without buckling the resilient walls of the reinforcement member 274, but additional compression allows the walls of the reinforcement member to further fold relative to each other into the configuration illustrated in Fig. 74. The walls will actually buckle so that the panel can be substantially compressed for cost savings during shipment.

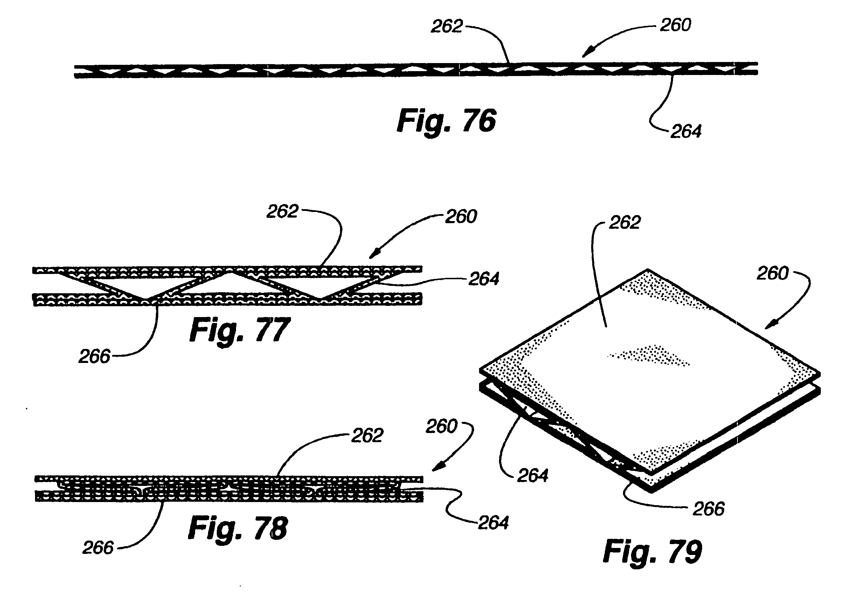

Figs. 76-79 illustrate the compressibility of the panel 260 described previously in connection with Figs. 63-65 wherein it will again be appreciated that a slight amount of compression, as seen in Fig. 77, is possible without buckling the resilient walls of the reinforcement member 264 but additional compression of the panel causes the walls to buckle and fold, as illustrated in Fig. 78, so that the panel is substantially thinner thereby occupying less space within a shipping container.

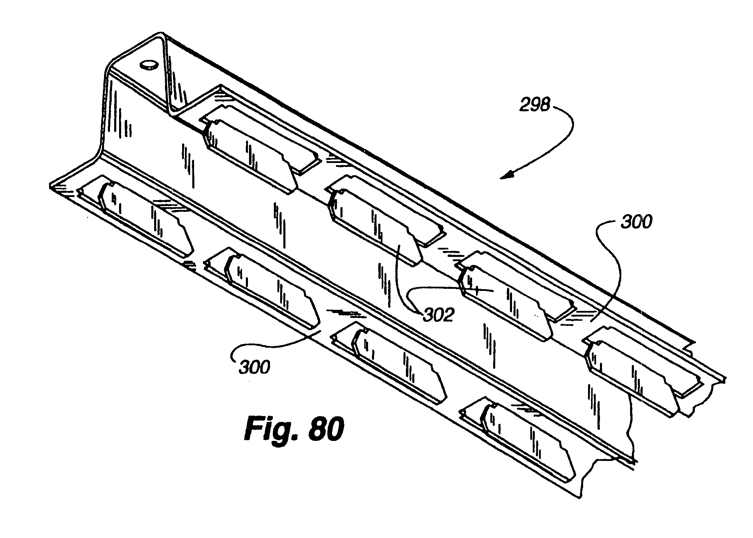

Figs. 80-83 illustrate a sixteenth embodiment 286 of a panel. This panel is very similar to the panel described previously in Figs. 60-62 in that it includes a lower planar sheet of material 288 and a reinforcing member 290 with upwardly opening trapezoidal channels 292 spaced by closed triangular shaped channels 294. As will be appreciated, the upwardly opening channels that are of trapezoidal cross-sectional configuration define a space 296 along the upper surface of the reinforcement member between the triangular channels 294. A support member 298, which is best seen in Fig. 80, is positioned across the top of the reinforcement member and extends perpendicularly to the channels in the reinforcement member so as to provide rigidity to the panel in a direction transverse to that provided by the reinforcement member so that the panel is rigidified in perpendicular directions.

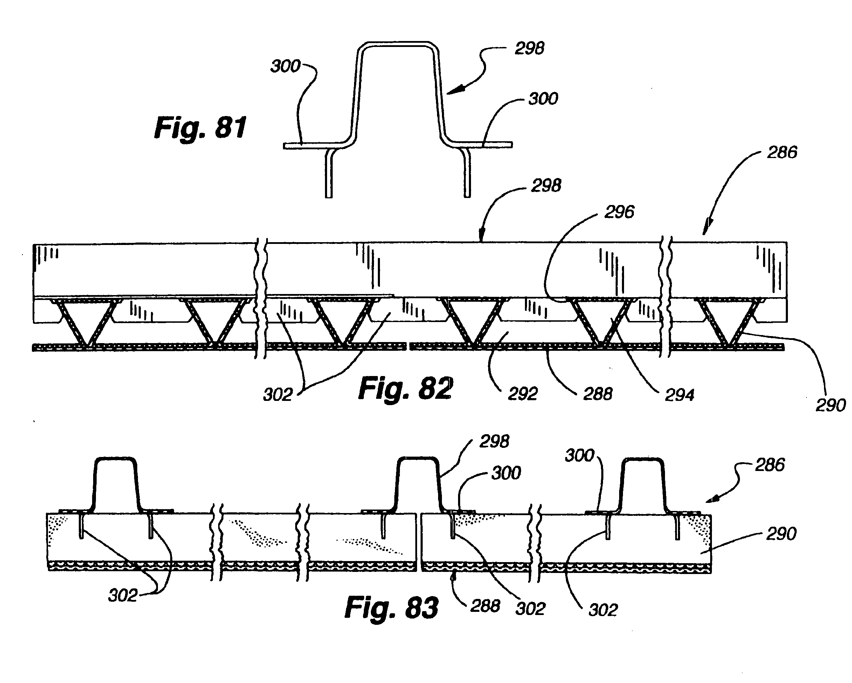

The support member 298, which can be made of the same material as the planar sheet 288 and the reinforcement member 284 and as seen in Fig. 80, includes a downwardly opening channel-shaped body of inverted U-shaped cross-section projecting away from the reinforcement member and having outwardly directed flanges 300 from which a plurality of tabs 302 are cut and bent to extend downwardly. The cross-section of the tabs 302 is best seen in Fig. 82 to conform generally to the walls and space 296 of the trapezoidal channels in the reinforcement member so as to mechanically connect the support member to the reinforcement member. The support member can, therefore, be mounted on the reinforcement member by positioning the support member perpendicular to the trapezoidal channels and sliding the support member along the length of the channels until it is desirably positioned. A plurality of the downwardly opening support members can be positioned at any desired spacing, as illustrated in Fig. 83. The support members, accordingly, substantially rigidify the panel so that it has very little flexibility in any perpendicular direction.

To the extent it is not clear from the above, the connection between the various components of the panels described can be achieved adhesively, ultrasonically, through heat fusion or any other acceptable bonding system. The connections are made where a component engages an upper or lower sheet of the panel or along peaks defined by a component of the panel.

It will be appreciated from the above that an improved panel for use in a drop ceiling system or in other similar uses has been provided that has variable features for adjusting the flexibility of the panel in longitudinal or transverse directions and also for varying the compressibility of the panel for shipping purposes. The exposed faces of the panels of this invention can also be modified by adding a continuous elastomeric polymer, such as a urethane or neoprene film or adhesive, as described, by way of example, with regard to the panels of Figs. 13 and 60-62 and/or a decorative film as described, by way of example, with regard to the panel of Fig. 13. Due to the flexible nature of the panels, they can also be easily inserted into the openings defined by the stringers and cross-members of a suspended support system and the panels will not break, as they are not brittle even when being flexed for insertion into the support system. With modifications to the suspension system, it will also be appreciated that the panels could be used in a wall of a building structure.

## Claims

1. A flexible ceiling panel (108) that can be folded or flexed while being inserted into an opening in a supporting grid work of a ceiling of a building structure and subsequently unfolded above said grid work so that the panel can be positioned on said grid work; said panel comprising:
- a planar upper sheet (110);
- a planar lower sheet (112); and
- a plurality of elongated resilient strips that are creased at predetermined locations where said strips are folded to form a plurality of parallel reinforcement members (114) between said upper and lower sheets (110, 112); each reinforcement member (114) being folded to include an upper flap (124), a lower flap (126) and an intermediate body (128); said upper flap (124) of each reinforcement member (114) being attached to said upper sheet (110), and said lower flap (126) of each reinforcement member being attached to said lower sheet (112);
- wherein said upper and lower sheets (110, 112) and said reinforcement members (114) are each of a somewhat rigid material that can be flexed; **characterised in that**:
said material of said upper sheet (110), said material of said lower sheet (112), and said material of said reinforcement members (114) are each a non-woven fabric of heat resistant fibers bound together by a heat moldable polymeric resin matrix or a thermal setting resin matrix.

2. The panel of claim 1 wherein said upper and lower sheets (110, 112) and said strips are of the same somewhat rigid material that can be flexed.

3. The panel of claim 1 or 2 wherein said flaps (124, 126) of each of said reinforcement members (114) are adhesively bonded, heat welded or ultrasonically bonded to said upper and lower sheets (110, 112).

4. The panel of any one of claims 1-3 further including a decorative layer of material secured to said lower sheet (112) with said lower flap (126) of each reinforcement member (114) being secured an upper face of said lower sheet (112) and said decorative layer being secured to lower face of said lower sheet.

5. The panel of claim 4 wherein said decorative layer is an elastomeric polymer.

6. The panel of claim 5 wherein said elastomeric polymer is a thermoplastic or thermosetting polymeric film.

7. The panel of any preceding claim, wherein each of said materials of said upper sheet, said lower sheet, and said reinforcement members comprises glass fibers embedded in a resin.

8. The panel of claim 7 wherein said material of said strips, forming said reinforcement members, is creased without damaging said glass fibers, to maintain resiliency in said material of said strips.

9. The panel of claim 7 or 8 wherein said resin is an acrylic resin.

10. The panel of any one of claims 7-9 wherein the length of said glass fibers in each of said materials of said upper sheet (110), said lower sheet (112), and/or said strips is in the range of one quarter of an inch to one inch.

11. The panel of any one of claims 7-10 wherein the thickness of said glass fibers in each of said materials of said upper sheet (110), said lower sheet (112), and/or said strips is in the range of seven to one-hundred microns.

12. The panel of any one of claims 7-11 wherein each of said materials of said upper sheet (110), said lower sheet (112) and/or said strips is of the same resin and glass fibers.

13. The panel of any one of claims 1-12 wherein said reinforcement members (114) are each of substantially S-shaped cross-section.

14. The panel of any one of claims 1-13 that is incorporated into a ceiling of a building structure.

15. A ceiling system comprising, in combination, a support structure having a plurality of perpendicular support members defining openings therebetween, said support members being adapted to support ceiling panels in said openings, and a ceiling panel in each of said openings as defined in any one of claims 1-13.

## Patentansprüche

1. Flexible Deckenplatte (108), die gefaltet oder gebogen werden kann, während sie in eine Öffnung in einem Trägerrost einer Decke eines Bauwerks eingesetzt wird, und anschließend oberhalb des genannten Trägerrosts auseinandergefaltet werden kann, so dass die Platte auf dem genannten Trägerrost angeordnet werden kann, wobei die Platte
- eine obere planare Materialbahn (110),
- eine untere planare Materialbahn (112) und
- mehrere längliche elastische Streifen umfasst, die an vorbestimmten Positionen mit Quetschfalten versehen sind, um mehrere parallele Verstärkungsglieder (114) zwischen der genannten oberen und unteren Materialbahn (110, 112) zu bilden; wobei jedes Verstärkungsglied (114) so gefaltet wird, dass es eine obere Klappe (124), eine untere Klappe (126) und einen dazwischen angeordneten Körper (128) umfasst und wobei die genannte obere Klappe (124) jedes Verstärkungsglieds (114) an der genannten oberen Materialbahn (110) und die genannte untere Klappe (126) jedes Verstärkungsglieds an der genannten unteren Materialbahn (112) befestigt wird;
- wobei die genannte obere Materialbahn (110) und die genannte untere Materialbahn (112) jeweils aus einem in gewissem Maße starren Material bestehen, welches gebogen werden kann, **dadurch gekennzeichnet, dass**
das genannte Material der genannten oberen Materialbahn (110), der genannten unteren Materialbahn (112) und der genannten Verstärkungsglieder (114) jeweils ein Vliesstoff aus wärmebeständigen Fasern ist, die durch eine Matrix aus wärmeformbarem Polymerharz oder eine Matrix aus einem wärmehärtenden Harz miteinander verbunden sind.

2. Platte gemäß Anspruch 1, bei der die genannte obere Materialbahn (110) und die genannte untere Materialbahn (112) aus dem gleichen in gewissem Maße starren Material bestehen, das gebogen werden kann.

3. Platte gemäß Anspruch 1 oder 2, bei der die genannten Klappen (124, 126) jedes der genannten Verstärkungsglieder (114) mit der genannten oberen Materialbahn (110) bzw. der genannten unteren Materialbahn (112) mittels Klebstoff, Warmschweißen oder Ultraschallschweißen verbunden sind.

4. Platte gemäß einem der Ansprüche 1 bis 3, die weiter eine Dekorschicht umfasst, die an der genannten unteren Materialbahn (112) befestigt ist, wobei die genannte untere Klappe (126) jedes Verstärkungsglieds (114) an einer Oberseite der genannten unteren Materialbahn (112) befestigt ist und die genannte Dekorschicht an der Unterseite der genannten unteren Materialbahn befestigt ist.

5. Platte gemäß Anspruch 4, bei der die genannte Dekorschicht aus einem elastomeren Polymer besteht.

6. Platte gemäß Anspruch 5, bei der das genannte elastomere Polymer eine thermoplastische oder duroplastische Polymerfolie ist.

7. Platte gemäß einem der vorstehenden Ansprüche, bei der das genannte Material der genannten oberen Materialbahn, der genannten unteren Materialbahn und der genannten Verstärkungsglieder jeweils Glasfasern umfasst, welche in dem Harz eingebettet sind.

8. Platte gemäß Anspruch 7, bei der das Material der genannten Streifen, welche die genannten Verstärkungsglieder bilden, geknickt wird, ohne die genannten Glasfasern zu beschädigen, so dass die Elastizität des genannten Materials der genannten Streifen erhalten bleibt.

9. Platte gemäß Anspruch 7 oder 8, bei der das genannte Harz ein Acrylharz ist.

10. Platte gemäß einem der Ansprüche 7 bis 9, bei der die Länge der genannten Glasfasern im Material der genannten oberen Materialbahn (110), der genannten unteren Materialbahn (112) und/oder der genannten Streifen jeweils zwischen einem Viertelzoll und einem Zoll beträgt.

11. Platte gemäß einem der Ansprüche 7 bis 10, bei der die Dicke der genannten Glasfasern im Material der genannten oberen Materialbahn (110), der genannten unteren Materialbahn (112) und/oder der genannten Streifen jeweils zwischen sieben und einhundert Mikron beträgt.

12. Platte gemäß einem der Ansprüche 7 bis 11, bei der das Material der genannten oberen Materialbahn (110), der genannten unteren Materialbahn (112) und/oder der genannten Streifen jeweils aus dem gleichen Harz und den gleichen Glasfasern besteht.

13. Platte nach einem der Ansprüche 1 bis 12, bei der die genannten Verstärkungsglieder (114) jeweils einen im Wesentlichen S-förmigen Querschnitt haben.

14. Platte nach einem der Ansprüche 1 bis 13, die in die Decke eines Bauwerks integriert ist.

15. Deckensystem umfassend eine Trägerkonstruktion mit mehreren rechtwinkligen Trägergliedern, welche Öffnungen zwischen sich definieren und welche dafür vorgesehen ist, Deckenplatten in den genannten Öffnungen zu tragen, in Kombination mit einer Deckenplatte in jeder der genannten Öffnungen, wie in einem der Ansprüche 1 bis 13 definiert.

## Revendications

1. Panneau de plafond souple (108) qui peut être plié ou fléchi lorsqu'il est inséré dans une ouverture dans un bâti de support à compartiments d'un plafond d'une structure d'immeuble et ultérieurement déplié au-dessus dudit bâti à compartiments, de sorte que le panneau peut être positionné sur ledit bâti à compartiments ; ledit panneau comprenant :
- une plaque supérieure plane (110) ;
- une plaque inférieure plane (112) ; et
- une pluralité de bandes élastiques de forme allongée qui sont plissées au niveau de positions prédéterminées où lesdites bandes sont pliées pour former une pluralité d'éléments de renforcement parallèles (114) entre lesdites plaques supérieure et inférieure (110, 112) ; chaque élément de renforcement (114) étant plié en vue d'inclure un rabat supérieur (124) et un rabat inférieur (126) et un corps intermédiaire (128) ; ledit rabat supérieur (124) de chaque élément de renforcement (114) étant fixé à ladite plaque supérieure (110), et ledit rabat inférieur (126) de chaque élément de renforcement étant fixé à ladite plaque inférieure (112) ;
- dans lequel lesdites plaques supérieure et inférieure (110, 112) et lesdits éléments de renforcement (114) sont, chacun, constitués d'un matériau quelque peu rigide qui peut être fléchi ; **caractérisé en ce que** : ledit matériau de ladite plaque supérieure (110), ledit matériau de ladite plaque inférieure (112) et ledit matériau desdits éléments de renforcement (114) sont, chacun, un tissu en intissé de fibres résistantes à la chaleur liées ensemble par une matrice de résine polymère moulable à chaud ou une matrice de résine thermodurcissable.

2. Panneau selon la revendication 1 dans lequel lesdites plaques supérieure et inférieure (110, 112) et lesdites bandes sont constituées du même matériau quelque peu rigide qui peut être fléchi.

3. Panneau selon la revendication 1 ou 2 dans lequel lesdits rabats (124, 126) de chacun desdits éléments de renforcement (114) sont liés par adhésif, thermosoudé ou lié par ultrasons aux dites plaques supérieure et inférieure (110, 112).

4. Panneau selon l'une quelconque des revendications 1 à 3 comportant, de plus, une couche décorative constituée d'un matériau fixé à ladite plaque inférieure (112), ledit rabat inférieur (126) de chaque élément de renforcement (114) étant fixé sur une face supérieure de ladite plaque inférieure (112) et ladite couche décorative étant fixée sur une face inférieure de ladite plaque inférieure.

5. Panneau selon la revendication 4 dans lequel ladite couche décorative est un polymère élastomère.

6. Panneau selon la revendication 5 dans lequel ledit polymère élastomère est un film de polymère thermoplastique ou thermodurcissable.

7. Panneau selon l'une quelconque des revendications précédentes, dans lequel chacun desdits matériaux de ladite plaque supérieure, de ladite plaque inférieure et desdits éléments de renforcement comporte des fibres de verres noyées dans une résine.

8. Panneau selon la revendication 7 dans lequel ledit matériau desdites bandes, formant lesdits éléments de renforcement, est plissé sans endommager lesdites fibres de verre afin de maintenir une élasticité dans ledit matériau desdites bandes.

9. Panneau selon la revendication 7 ou 8 dans lequel ladite résine est une résine acrylique.

10. Panneau selon l'une quelconque des revendications 7 à 9 dans lequel la longueur desdites fibres de verre dans chacun desdits matériaux de ladite plaque supérieure (110), de ladite plaque inférieure (112) et/ou desdites bandes se situe dans la plage d'un quart de pouce à un pouce.

11. Panneau selon l'une quelconque des revendications 7 à 10 dans lequel l'épaisseur desdites fibres de verre dans chacun desdits matériaux de ladite plaque supérieure (110), de ladite plaque inférieure (112), et/ou desdites bandes se situe dans la plage de sept à cent microns.

12. Panneau selon l'une quelconque des revendications 7 à 11 dans lequel chacun desdits matériaux de ladite plaque supérieure (110), de ladite plaque inférieure (112), et/ou desdites bandes est constitué de la même résine et des mêmes fibres de verre.

13. Panneau selon l'une quelconque des revendications 1 à 12 dans lequel lesdits éléments de renforcement (114) présentent, chacun, une section transversale essentiellement configurée en S.

14. Panneau selon l'une quelconque des revendications 1 à 13 qui est incorporé dans un plafond d'une structure d'immeuble.

15. Système de plafond comprenant, en combinaison, une structure de support comportant une pluralité d'éléments de support perpendiculaires définissant entre eux des ouvertures, lesdits éléments de support étant adaptés pour supporter des panneaux de plafond dans lesdites ouvertures, et un panneau de plafond dans chacune desdites ouvertures tel que défini dans l'une quelconque des revendications 1 à 13.
